(19) Europäisches Patentamt
European Patent Office
Office européen des brevets

(11) **EP 4 501 515 A1**

(12) **EUROPEAN PATENT APPLICATION**
published in accordance with Art. 153(4) EPC

(43) Date of publication:
**05.02.2025 Bulletin 2025/06**

(21) Application number: 22933691.2

(22) Date of filing: **23.12.2022**

(51) International Patent Classification (IPC):
**B23K 11/14** (2006.01)      **B23K 11/00** (2006.01)
**B23K 11/16** (2006.01)      **B23K 11/24** (2006.01)
**C22C 38/00** (2006.01)      **C22C 38/04** (2006.01)

(52) Cooperative Patent Classification (CPC):
**B23K 11/00; B23K 11/14; B23K 11/16; B23K 11/24;
C22C 38/00; C22C 38/04**

(86) International application number:
**PCT/JP2022/047752**

(87) International publication number:
**WO 2023/181564 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022 JP 2022050329**

(71) Applicants:
• **NIPPON STEEL CORPORATION
  Chiyoda-ku
  Tokyo 100-8071 (JP)**
• **Toyoda Iron Works Co., Ltd.
  Toyota-shi
  Aichi 471-8507 (JP)**

(72) Inventors:
• **YASUYAMA Masanori
  Tokyo 100-8071 (JP)**

• **AZUMA Masafumi
  Tokyo 100-8071 (JP)**
• **MURAYAMA Gen
  Tokyo 100-8071 (JP)**
• **IMAMURA Takashi
  Tokyo 100-8071 (JP)**
• **TOKUNAGA Masatoshi
  Tokyo 100-8071 (JP)**
• **OI Koichi
  Toyota-shi, Aichi 471-8507 (JP)**
• **OYAMA Yoshinori
  Toyota-shi, Aichi 471-8507 (JP)**
• **KAWAGUCHI Osamu
  Toyota-shi, Aichi 471-8507 (JP)**

(74) Representative: **Zimmermann & Partner
  Patentanwälte mbB
  Postfach 330 920
  80069 München (DE)**

(54) **METHOD FOR MANUFACTURING PROJECTION WELDED JOINT, PROJECTION WELDED JOINT, AND AUTOMOBILE COMPONENT**

(57)      A method for manufacturing a projection weld joint according to an aspect of the present invention includes: a first energizing step of energizing a steel sheet and a steel member so as to form a plurality of joint portions by projection welding a steel member to a first surface of a steel sheet that is a non-coated steel sheet or a zinc-type-coated steel sheet, in which the steel sheet has a tensile strength of 1.5 GPa or more, and the steel sheet has a Ceq of 0.30 mass% or more, and the manufacturing method further includes: a cooling step of quenching each of the plurality of joint portions; and a second energizing step of further energizing the steel sheet and the steel member so as to temper an end region in each of the plurality of joint portions.

FIG. 1B

EP 4 501 515 A1

## Description

Technical Field of the Invention

The present invention relates to a method for manufacturing a projection weld joint, a projection weld joint, and a vehicle component.

The present application claims priority based on Japanese Patent Application No. 2022-050329 filed in Japan on March 25, 2022, the contents of which are incorporated herein by reference.

Related Art

In recent years, in the vehicle field, there is an increasing need to use a high strength steel sheet for a vehicle body, a component, and the like in order to reduce the weight of the vehicle body and improve collision safety for the purpose of reducing the fuel consumption and reducing the carbon dioxide emission. In particular, recently, cases where adoption of a steel sheet having a tensile strength of 1.5 GPa or more are increasing.

For example, in a vehicle structural member such as a frontside member, a center pillar, and a hinge reinforcement, a configuration in which a steel part such as a nut is welded to a part made of a high strength steel sheet is adopted. In manufacturing a vehicle structural member to which steel parts are joined, a method of joining a nut to a surface of a high strength steel sheet using a projection welding method is generally adopted. Projection welding is resistance welding in which a projection formed at a welded portion of one base metal is brought into contact with a welded portion of the other base metal to pass a current, and generation of resistance heat is limited to a relatively small specific portion. When a nut is projection welded to a steel sheet, a nut provided with a plurality of projections is pressurized against the steel sheet, and these projections are energized to locally heat a contact interface between each projection and the steel sheet, thereby causing melting and solidification or solid phase joining. A region formed by joining the nut and the steel sheet is referred to as a joint portion in the following description.

One of the characteristics required for a vehicle structural member obtained by projection welding includes delayed fracture resistance property. Delayed fracture is a phenomenon in which a high strength steel part is suddenly brittlely fractured with almost no apparent plastic deformation after a certain period of time in a state where a high strength steel part is subjected to a static applied stress. It is considered that the delayed fracture resistance property of the joint portion of the steel material is affected by (1) hardness of the joint portion and a heat affected zone generated around the joint portion, (2) hydrogen concentration of the joint portion, and (3) stress applied to the joint portion. In general, as these values (1) to (3) are larger, delayed fracture is more likely to occur. On the other hand, if even one of these factors (1) to (3) can be suppressed, the delayed fracture can be suppressed.

In the technical field of projection weld joints, various attempts have been made to improve delayed fracture resistance property.

Patent Document 1 discloses a vehicle structural member obtained by providing a high strength steel sheet having a tensile strength before welding of 1100 MPa or more with a piercing hole, and joining the high strength steel sheet and a welding nut or a welding bolt by projection welding in which energization heating is performed while applying pressure in a state in which the center of the piercing hole and the center of a screw portion of the welding nut or the welding bolt substantially coincide with each other, in which the welding nut or the welding bolt has a flange section whose lower surface side is a joining surface with the high strength steel sheet, and a substantially hemispherical projection portion is provided on the joining surface, and further, when the center on a semi-circular chord formed by intersecting a substantially hemispherical arc of the projection portion and the joining surface is C and the radius of the projection portion is R (mm) on a longitudinal surface of the flange section, a recessed part is provided within a range of a distance from the center C to 3R, the recessed part is locally provided on an upper surface of the flange section on a side opposite to the joining surface so as to substantially coincide at a position corresponding to the projection portion, and the total volume of the recessed part is in a range of 0.7 to 1.3 times the total volume of the projection portion, the vehicle structural member being excellent in delayed fracture properties and static strength properties of a weld.

Patent Document 2 discloses a vehicle structural member having a welding nut portion obtained by providing a high strength steel sheet having a tensile strength before welding of 1100 MPa or more with a piercing hole, and joining the high strength steel sheet and the welding nut by projection welding in which energization heating is performed while pressurizing the high strength steel sheet and the welding nut in a state in which the center of the piercing hole and the center of a screw hole of the welding nut substantially coincide with each other, in which the welding nut is provided with a substantially hemispherical projection portion on a joining surface with the high strength steel sheet, and a relationship between a depth H1 in a sheet thickness direction of a weld heat affected zone made to appear using a metal flow corrosive liquid in the high strength steel sheet and a sheet thickness H2 of the high strength steel sheet satisfies a following formula {H1/H2 = 0.05 to 0.5}.

Patent Document 3 discloses a method for manufacturing a projection weld joint in which, when projection welding is performed between a nut having a predetermined composition and a high strength steel sheet having a tensile strength of 750 to 1600 MPa, a sheet thickness of 0.8 to 3.0 mm and a carbon equivalent Ceq of 0.22 to 0.50%, post energizing is performed at a post energizing current POC1 and a post energizing time POt1 immediately after main energizing is performed at a pressurizing force EF and an energizing time Wt of an electrode, and then the electrode is held for an electrode holding time Ht, so that the ratio of an area SJ of a joint portion between the nut and the high strength steel sheet to an area SR of a nominal diameter portion of the nut satisfies a relationship represented by a following formula {0.7 ≤ SJ/SR ≤ 1.5}, and the absolute maximum value of the Vickers hardnesses of the joint portion and a heat affected zone is controlled to be 550 Hv or less.

Patent Document 4 discloses a projection weld joint formed by projection welding a nut (or bolt) having a predetermined composition and a high strength steel sheet having a tensile strength of 750 to 1600 MPa, a sheet thickness of 0.8 to 3.0 mm, and a carbon equivalent Ceq represented by a following formula {[C] + [Si]/30 + [Mn]/20 + 2 [P] + 4 [S]} in a range of 0.22 to 0.50%, in which the ratio of an area SJ of a joint portion A between the nut (or bolt) and the high strength steel sheet to an area SR of a nominal diameter portion of the nut (or bolt) satisfies a relationship represented by a following formula {0.7 ≤ SJ/SR ≤ 1.5}, and the absolute maximum value of Vickers hardnesses of the joint portion and a heat affected zone is 550 Hv or less.

Patent Document 5 discloses a projection welding method including: a preparation step of preparing a steel-based first workpiece having a plate-shaped portion formed in a sheet shape and a steel-based second workpiece having a plurality of projections; a first energization operation of energizing between the first workpiece and the second workpiece under conditions of a welding current 11 and an energizing time T1 while performing a pressurization operation of pressurizing at least one of the first workpiece and the second workpiece so as to pressurize the projection of the second workpiece against the plate-shaped portion of the first workpiece; and then a second energization operation of energizing between the first workpiece and the second workpiece under conditions of a welding current I2 and an energizing time T2, in which the welding current 11 of the first energization operation is smaller than the welding current I2 of the second energization operation, and the energizing time T1 of the first energization operation is set shorter than the energizing time T2 of the second energization operation.

Citation List

Patent Document

Patent Document 1: Japanese Patent Publication No. 5626025
Patent Document 2: Japanese Patent Publication No. 5613521
Patent Document 3: Japanese Unexamined Patent Application, First Publication No. 2013-078784
Patent Document 4: Japanese Unexamined Patent Application, First Publication No. 2012-157900
Patent Document 5: Japanese Unexamined Patent Application, First Publication No. 2004-050280

Summary of Invention

Problems to be Solved by the Invention

In the techniques of Patent Documents 1 and 2, the stress applied to the joint portion is reduced by optimizing the shape of the nut to be joined to the steel sheet. In the technique of Patent Document 5, variations in welding strength among a plurality of projections are reduced by optimizing welding conditions. However, it is estimated that the joint portion obtained by these techniques has high hardness. From the viewpoint of steel material strength, which is one of factors of delayed fracture, there remains room for further improving delayed fracture resistance property.

The techniques of Patent Documents 3 and 4 attempt to improve delayed fracture resistance property by optimizing welding conditions. However, these techniques are not intended for high strength steel sheets having a tensile strength of 1.5 GPa or more.

In view of the above circumstances, an object of the present invention is to provide a method for manufacturing a projection weld joint which is composed of a high strength steel sheet having a tensile strength of 1.5 GPa or more and is excellent in delayed fracture resistance property, a projection weld joint, and a vehicle component. Means for Solving the Problem

The gist of the present invention is as follows.
(1) A method for manufacturing a projection weld joint according to an aspect of the present invention includes a first energizing step of energizing a steel sheet and a steel member to so as to form a plurality of joint portions by projection welding the steel member, that is a nut or a bolt having a plurality of projections, to a first surface of the steel sheet that is a non-coated steel sheet or a zinc-type-coated steel sheet, in which the steel sheet has a tensile strength of 1.5 GPa or more, and the steel sheet has a carbon equivalent Ceq calculated by following formula 1 of 0.30 mass% or more, and when, in a cross section passing through the center of the steel member and the center of the joint portion and perpendicular to the first surface of the steel sheet, a position farthest from the center of the steel member in the joint portion is defined as an end portion of the joint portion, and a region from the end portion to a position 0.5 mm away from the end portion towards the center of the steel member along the first surface of the steel sheet in the joint portion is defined as an end region of the joint portion, the manufacturing method further includes: a cooling step of quenching each of the plurality of joint portions; and a second energizing step of further energizing the steel sheet and the steel member so as to temper the end region in each of the plurality of joint portions.

$$Ceq = [C] + [Si]/30 + [Mn]/20 + 2 \times [P] + 4 \times [S]: \text{formula 1}$$

wherein the element symbol included in the formula 1 is a content of each element included in the steel sheet.

(2) In the method for manufacturing a projection weld joint according to (1) above, the steel sheet may be a hot stamping steel sheet.

(3) In the method for manufacturing a projection weld joint according to (1) or (2) above, the steel sheet may have a chemical composition containing, by mass%, C: 0.07 to 0.45%, Si: 0.001 to 2.50%, Mn: 0.8 to 5.0%, P: 0.03% or less, and S: 0.01% or less.

(4) In the method for manufacturing a projection weld joint according to any one of (1) to (3) above, the steel sheet may be a zinc-type-coated hot stamping steel sheet.

(5) In the method for manufacturing a projection weld joint according to any one of (1) to (4) above, the steel sheet may be a zinc-type-coated hot stamping steel sheet, the steel sheet may have a sheet thickness of 1.2 mm to 3.6 mm, the length of the cooling step may be 332 msec or more, and product I2 × t2 of average current value I2 and energizing time t2 in the second energizing step may be 0.5 times or more product I1 × t1 of average current value I1 and energizing time t1 in the first energizing step.

(6) In the method for manufacturing a projection weld joint according to any one of (1) to (5) above, the method for manufacturing a projection weld joint may further include a pre-energizing step of energizing the steel sheet and the steel member with a current value less than the current value at start of the first energizing step before the first energizing step.

(7) In the method for manufacturing a projection weld joint according to any one of (1) to (6) above, the steel member may be the nut.

(8) A projection weld joint according to another aspect of the present invention includes a steel sheet that is a non-coated steel sheet or a zinc-type-coated steel sheet; a steel member that is a nut or a bolt; and a plurality of joint portions that join a first surface of the steel sheet and the steel member, in which the steel sheet has a tensile strength of 1.5 GPa or more, and the steel sheet has a carbon equivalent Ceq calculated by following formula 2 of 0.30 mass% or more, and when, in a cross section passing through the center of the steel member and the center of the joint portion and perpendicular to the first surface of the steel sheet, a position farthest from the center of the steel member in the joint portion is defined as an end portion of the joint portion, and a region from the end portion to a position 0.5 mm away from the end portion towards the center of the steel member along the first surface of the steel sheet in the joint portion is defined as an end region of the joint portion, a maximum hardness Hedge of the end region obtained by continuously measuring the Vickers hardness at a position 0.3 mm deep from the first surface in each of the plurality of joint portions satisfies a relationship of formula 3, and a maximum hardness Hmax of the joint portions obtained by continuously measuring the Vickers hardness at a position 0.3 mm deep from the first surface in each of the plurality of joint portions satisfies a relationship of formula 4.

$$Ceq = [C] + [Si]/30 + [Mn]/20 + 2 \times [P] + 4 \times [S]: \text{formula 2}$$

$$Hedge < 0.9 \times Hm: \text{formula 3}$$

$$Hmax > 0.9 \times Hm: \text{formula 4}$$

wherein the symbol Hm included in the formulas 3 and 4 is a value calculated by formula 5.

$$\mathrm{Hm} = 884 \times [\mathrm{C}] \times (1 - 0.3 \times [\mathrm{C}]^2) + 294 \text{: formula 5}$$

wherein the element symbol included in the formula 2 and the formula 5 is a content of each element included in the steel sheet.

(9) In the projection weld joint according to (8) above, the maximum hardness Hedge of the end region may satisfy a relationship of formula 3' in each of the plurality of joint portions.

$$\mathrm{Hedge} < 0.8 \times \mathrm{Hm} \text{: formula 3'}$$

(10) In the projection weld joint according to (8) or (9) above, the steel sheet may be a zinc-type-coated hot stamping steel sheet.

(11) A vehicle component according to another aspect of the present invention includes the projection weld joint according to any one of (8) to (10) above.

Effects of the Invention

According to the present invention, it is possible to provide a method for manufacturing a projection weld joint which is composed of a high strength steel sheet having a tensile strength of 1.5 GPa or more and is excellent in delayed fracture resistance property, a projection weld joint, and a vehicle component.

Brief Description of the Drawings

FIG. 1A is a schematic cross-sectional view showing a state before a first energizing step in a method for manufacturing a projection weld joint according to the present embodiment.
FIG. 1B is a schematic cross-sectional view showing a state after a second energizing step in the method for manufacturing a projection weld joint according to the present embodiment.
FIG. 1C is an enlarged cross-sectional view showing an end region of a joint portion.
FIG. 2 is a plan view of a steel member.
FIG. 3 is a view for explaining a method for measuring a maximum hardness Hedge of an end region of a joint portion and a maximum hardness Hmax of the entire joint portion.

Embodiments of the Invention

<Method for manufacturing projection weld joint>
Hereinafter, a method for manufacturing a projection weld joint according to the present embodiment will be described with reference to the drawings as appropriate.
It has been considered that the cause of the delayed fracture in a projection weld joint 1 is stress introduced into a joint portion 13 and quench hardening occurred in the joint portion 13. The stress in the joint portion 13 is considered to be caused by heat stress generated in a cooling process of the joint portion 13 formed by welding, strain generated in the joint portion 13 due to electrode opening, and the like. The present inventors have found that cracks are likely to occur at a specific portion when opening the electrode at which stress is introduced into the joint portion 13. Hereinafter, a part where cracks are likely to occur is referred to as a "dangerous part". Furthermore, the present inventors have found that the delayed fracture in the projection weld joint 1 can be extremely effectively suppressed by reducing the hardness of the dangerous part.
The method for manufacturing a projection weld joint according to the present embodiment, which is obtained based on the findings of the present inventors, includes:

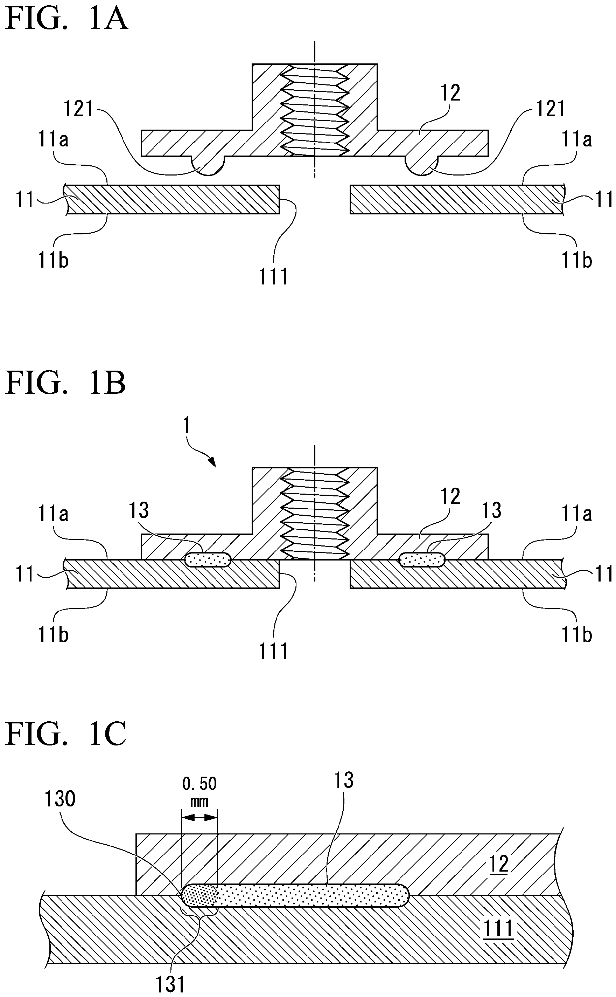

(S1) as shown in FIGS. 1A and 1B, a first energizing step of energizing a steel sheet 11 and a steel member 12 so as to form a plurality of joint portions 13 by projection welding the steel member 12 that is a nut or a bolt having a plurality of projections 121 to a first surface 11a of the steel sheet 11 that is a non-coated steel sheet or a zinc-type-coated steel sheet,
and further includes:

(S2) a cooling step of quenching an end region 131 of each of the plurality of joint portions 13 shown in FIG. 1C; and

(S3) a second energizing step of further energizing the steel sheet 11 and the steel member 12 so as to temper the end region 131 in each of the plurality of joint portions 13.

The end region 131 is a region specified in a cross section passing through the center of the steel member 12 and the center of the joint portion 13 and perpendicular to the first surface 11a of the steel sheet 11. Specifically, in the cross section, a position farthest from the center of the steel member 12 in the joint portion 13 is defined as the end portion 130 of the joint portion 13. Then, a region of the joint portion 13 from the end portion 130 to a position 0.5 mm away from the end portion 130 towards the center of the steel member 12 along the first surface 11a of the steel sheet 11 is defined as an end region 131 of the joint portion 13. The end region 131 corresponds to the above-described dangerous part. Hereinafter, the manufacturing method according to the present embodiment will be described in detail.

(Steel sheet 11)

The steel sheet 11 is a high strength steel sheet having a tensile strength of 1.5 GPa or more and a carbon equivalent Ceq of 0.30 mass% or more. As a result, the projection weld joint 1 has extremely excellent static strength. The steel sheet 11 may have a tensile strength of 1.6 GPa or more, 1.7 GPa or more, or 1.8 GPa or more. The steel sheet 11 may have a carbon equivalent Ceq of 0.32 mass% or more, 0.35 mass% or more, or 0.38 mass% or more.
The carbon equivalent Ceq is a value calculated by following formula 1.

$$Ceq = [C] + [Si]/30 + [Mn]/20 + 2 \times [P] + 4 \times [S]: \text{formula 1}$$

The element symbol included in formula 1 is the content of each element included in the steel sheet 11. The carbon equivalent Ceq is an index value of hardenability of the steel material. The higher the carbon equivalent Ceq, the larger the amount of increase in hardness of the steel material due to quenching.
In the method for manufacturing a projection weld joint according to the present embodiment, hereinafter, for convenience of description, among two surfaces of the steel sheet 11, a surface to which the steel member 12 is welded is referred to as a first surface 11a, and a surface opposite thereto is referred to as a second surface 11b. However, the steel member 12 may be welded to both surfaces of the steel sheet 11. In this case, the first surface 11a and the second surface 11b of the steel sheet may be distinguished according to the above definition according to the steel member of interest.
A shape of the steel sheet 11 is not particularly limited. For example, the steel sheet 11 may be a flat sheet. On the other hand, as illustrated in FIGS. 1A and 1B, a through hole 111 may be provided in the steel sheet 11. When the steel member 12 is a nut, a bolt is attached to the projection weld joint 1 so as to penetrate the projection weld joint 1 by axially aligning the hole of the nut and the through hole 111.
Then, the steel sheet 11 is a non-coated steel sheet or a zinc-type-coated steel sheet. Examples of the zinc-type coating are hot-dip galvanizing coating, hot-dip galvannealing coating, and the like. The zinc-type coating has a function of suppressing formation of scale on the surface of the steel sheet 11 when the steel sheet 11 is heated for hot stamping. The coating weight of the zinc-type coating is preferably, for example, within a range of 30 to 80 g/m$^2$ per one surface.
For example, when the projection weld joint 1 is used as a vehicle component, the steel sheet 11 is preferably a hot stamping steel sheet. The hot stamping steel sheet is a steel sheet subjected to hot-stamping. In addition, zinc-type coating may be provided on the surface of the hot stamping steel sheet. The zinc-type-coated steel sheet which is subjected to hot-stamping is referred to as a zinc-type-coated hot stamping steel sheet in the present embodiment.
A chemical composition of the steel sheet 11 is not particularly limited. For example, the steel sheet 11 may have a chemical composition containing, by mass%, C: 0.07 to 0.45%, Si: 0.001 to 2.50%, Mn: 0.8 to 5.0%, P: 0.03% or less, and S: 0.01% or less. In this case, the remainder of the chemical composition contains Fe and impurities. A steel sheet having such a chemical composition can be suitably used as a hot stamping steel sheet.
The thickness of the steel sheet 11 is also not particularly limited. For example, when the steel sheet 11 is a hot stamping steel sheet, the sheet thickness of the steel sheet 11 is preferably within a range of 1.2 mm to 3.6 mm. In addition, various sheet thicknesses according to the application of the projection weld joint 1 can be applied to the steel sheet 11.

(Steel member 12)

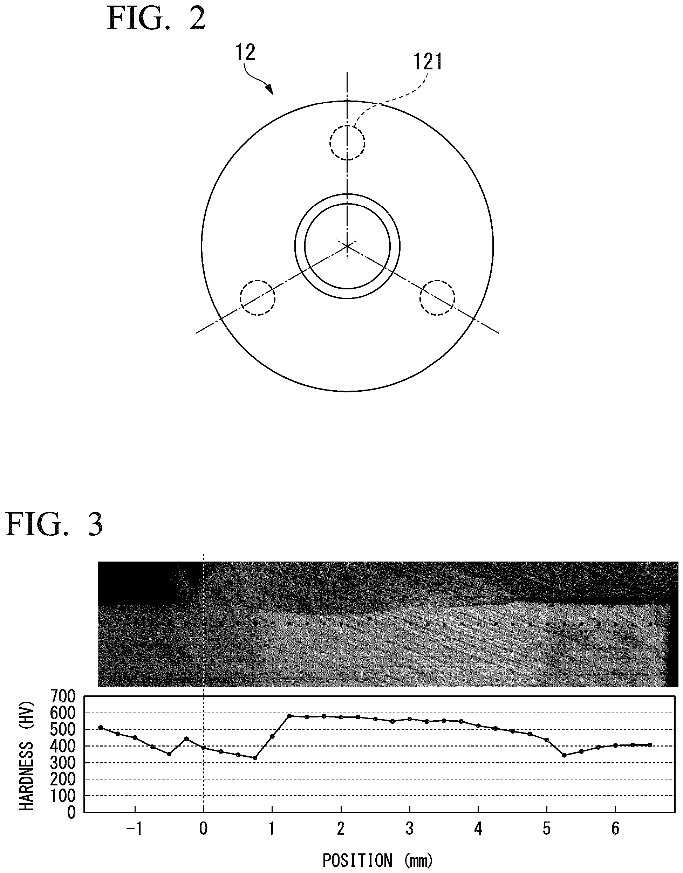

As shown in FIG. 1A, the steel member 12 has a plurality of projections 121. The projection 121 is pressurized against the steel sheet 11 during projection welding to form a current path. Then, the projection 121 concentrates current on a contact surface between the plurality of projections 121 and the steel sheet 11 to form a joint portion 13 that joins the steel member 12 and the steel sheet 11.
In order to reliably join the steel member 12 to the steel sheet 11, the number of projections 121 is set to 2 or more. For example, the number of projections 121 may be 3, 4, 5, or 6. As will be described later, from the viewpoint of uniformizing the contact state between each of the plurality of projections 121 and the steel sheet 11, the number of projections 121 is most preferably 3. The positions of the plurality of protrusions 121 are not particularly limited. From the viewpoint of uniformizing the contact state between each of the plurality of projections 121 and the steel sheet 11, as shown in FIG. 2, it is preferable that the plurality of projections 121 are disposed at positions rotationally symmetric with respect to the centroid of the steel member 12 when the steel member 12 is viewed in a plane view with respect to the joining surface.

A shape of the steel member 12 is not particularly limited. For example, when the projection weld joint 1 is used as a vehicle component, the steel member 12 is preferably a bolt or a nut. However, various shapes can be applied to the steel member 12 depending on the application of the projection weld joint 1. The strength, chemical composition, and the like of the steel member 12 are also not particularly limited. For example, the material of the steel member 12 may be S10C, S25C, or the like.

In the method for manufacturing a projection weld joint according to the present embodiment, a first energizing step of performing projection welding of the steel member 12 and the steel sheet 11, a cooling step of quenching the joint portion 13, and a second energizing step of tempering the joint portion 13 are performed. A device for performing a series of steps, particularly a first energizing step for projection welding, needs to have a function of pressurizing the steel member 12 toward the steel sheet 11 and a function of energizing the steel member 12 and the steel sheet 11. For example, a spot welding machine has a function of pressurizing and energizing an object to be welded using a pair of electrodes. Usually, the electrode of the spot-welding device also has a function of cooling an object to be welded. Therefore, a preferred example of the projection welding device is a spot-welding device.

(First energizing step)

In the method for manufacturing a projection weld joint according to the present embodiment, first, the steel sheet 11 and the steel member 12 are subjected to the first energizing step so as to form the plurality of joint portions 13 by projection welding the steel member 12 having the plurality of projections 121 to the first surface 11a of the steel sheet 11. At the time of projection welding, energization is performed while pressurizing the steel sheet 11 and the steel member 12 so as to pressurize the plurality of projections 121 against the first surface 11a of the steel sheet 11. When the current concentrates on the contact surface between the projection 121 and the first surface 11a of the steel sheet 11, the temperature of the contact surface rises, and the joint portion 13 that joins the steel sheet 11 and the steel member 12 is formed.

When the current value in the first energizing step is high, the contact surface between the first surface 11a of the steel sheet 11 and the projection 121 and the vicinity thereof are melted and solidified to form a weld metal at the joint portion 13. When the current value in the first energizing step is low, the contact surface and the vicinity thereof are not melted, and the joint portion 13 becomes a solid-phase joining surface. In the method for manufacturing a projection weld joint 1 according to the present embodiment, the joint portion 13 may be a weld metal or a solid-phase joining surface. Also, when the current value and/or the pressurizing force in the first energizing step are large and the projection 121 is small, as shown in FIG. 1B, the projection 121 may be crushed and disappear in the first energizing step. On the other hand, the projection 121 may remain after the first energizing step. In the method for manufacturing a projection weld joint 1 according to the present embodiment, the projection 121 may remain or may disappear after the first energizing step. For the above reasons, the energizing condition and the pressurization condition in the first energizing step are not particularly limited.

(Cooling step)

In the method for manufacturing a projection weld joint according to the present embodiment, after the first energizing step, the plurality of joint portions 13 are cooled in order to quench the plurality of end regions 131 in each of the plurality of joint portions 13. This cooling is referred to as a cooling step. The end region 131 is a region from an end portion 130 to a position 0.5 mm away from the end portion 130 of the joint portion 13 as described above with reference to FIG. 1C. The end portion 130 of the joint portion 13 is a position farthest from the center of the steel member 12 in the joint portion 13.

The cooling method is not particularly limited. For example, a flow path may be provided inside an electrode used for energization, and a cooling medium may flow through the flow path. When the current value is reduced to 0 or a small value close to 0 while the electrode having such a configuration is in contact with the steel sheet 11 and the steel member 12, the joint portion 13 is rapidly cooled by a heat removal phenomenon from the joint portion 13 to the electrode. Then, quench hardening occurs in the entire joint portion 13 including the end region 131.

In the cooling step, it is necessary to cool all the joint portions 13. On the other hand, the cooling time and other conditions in the cooling step are not particularly limited. Cooling conditions that can cause quench hardening can be appropriately selected according to the configurations of the steel sheet 11 and the steel member 12. For example, the presence or absence of quench hardening can be determined based on the Hm of the steel sheet. In addition, the steel sheet 11 and the steel member 12 to be joined are subjected to test welding in which a second energizing step to be described later is omitted, and the hardness of the joint portion obtained by the test welding is evaluated, whereby whether or not the cooling condition in the cooling step in the test welding causes quench hardening can be confirmed. By repeating such test welding, suitable cooling conditions can be determined. Examples of suitable cooling conditions will be described later.

(Second energizing step)

In the method for manufacturing a projection weld joint according to the present embodiment, after the cooling step, the steel sheet 11 and the steel member 12 are energized so as to temper the plurality of end regions 131 in each of the plurality of joint portions 13. This energizing step is referred to as second energization. When the end region 131 is tempered by the second energizing step, the end region 131 is softened. Accordingly, in the cooling step, the stress introduced into the end region 131 is relaxed. Furthermore, by softening the end region 131 and then opening the electrode, stress introduced into the end region 131 at the electrode opening is also relaxed. The tempering needs to be performed on all the joint portions 13.

The present inventors have found that the end region 131 is a dangerous part where delayed fracture is likely to occur. By reducing the stress, which is one of the factors causing the delayed fracture, in the end region 131, the delayed fracture can be suppressed.

At the start of the first energizing step, the contact area between the projection 121 of the steel member 12 and the steel sheet 11 is extremely small, and thus the current density at the contact surface is high. Therefore, in the first energizing step, the contact surface is heated to an extremely high temperature, and quench hardening occurs over the entire joint portion 13. On the other hand, since the joint portion 13 is formed between the projection 121 of the steel member 12 and the steel sheet 11 at the start of the second energizing step, the current density at the joint portion 13 is lower than that at the start of the first energizing step. The present inventors have found that when the second energizing step is performed in this state, a temperature difference occurs between a region close to the center of the steel member 12 and a region far from the center of the steel member 12. By utilizing this phenomenon, tempering softening can be caused only in the end region 131 of the joint portion 13 in the second energizing step.

The condition of the second energizing step is not particularly limited as long as the end region 131 can be tempered. An appropriate current value and energizing time may be set according to the configurations of the steel sheet 11 and the steel member 12, the conditions of the first energizing step and the cooling step performed before the second energizing step, and the like.

In spot welding classified as resistance welding similar to projection welding, a technique is known in which a nugget is formed by main energizing, and then the nugget is tempered by post energizing. However, it is not preferable to use the post-energizing condition in spot welding as the second energizing condition in projection welding. This is because, while spot welding has one welding point, projection welding has a plurality of welding points, and it is necessary to match the amount of heat generation and the like at each welding point as much as possible. In projection welding, there are more matters to be considered than spot welding, and the contents thereof are different between the two. Therefore, the procedure for optimizing the welding condition is also different between the two. In implementation of the method for manufacturing a projection weld joint according to the present embodiment, it is preferable to optimize the welding conditions according to the shape, material, and the like of the member.

As described above, the steel sheet 11 may be a zinc-type-coated hot stamping steel sheet. The zinc-type hot stamping steel sheet is excellent in corrosion resistance and the like.

However, it is generally considered that a zinc-type hot stamping steel sheet is not suitable for projection welding with a steel member having a plurality of projections. This is because, when the zinc-type-coated steel sheet is heated for hot stamping, porous zinc oxide is generated on the surface of the zinc-type-coated steel sheet, and the surface resistance thereof is large and increases ununiformly. For example, the surface resistance of a zinc-type-coated hot stamping steel sheet may be more than 10 mΩ on average after heating for hot stamping. Further, when the present inventors measured the surface resistance of the zinc-type-coated hot stamping steel sheet after heating, the surface resistance largely varied within a range of about 1 to 400 mΩ depending on the measurement location.

In order to ensure the joining strength, it is preferable to uniformly generate heat in the plurality of projections 121. On the other hand, the variation in the surface resistance of the steel sheet 11 varies the resistance value of the current path passing through each of the plurality of projections 121, thereby varying the amount of heat generation in the plurality of projections 121. In this case, even if an appropriate welding condition is set for one projection 121, the welding condition may be inappropriate for another projection 121. For the above reasons, the variation in the surface resistance of the steel sheet 11 adversely affects the joining strength of the projection weld joint 1. Therefore, in the prior art, there has been almost no example in which a steel member is attached to a zinc-type-coated hot stamping steel sheet by projection welding.

However, in the method for manufacturing a projection weld joint according to the present embodiment, quenching and tempering are performed on the joint portion 13 by the cooling step and the second energizing step after performing the first energizing step for projection welding. The present inventors have found that an adverse effect caused by high surface resistance is mitigated and cracks are reduced through this quenching and tempering. This is presumed to be because the hardness of the joint portion 13 embrittled by improper welding conditions is reduced by tempering. Therefore, in the method for manufacturing a projection weld joint according to the present embodiment, a zinc-type-coated hot stamping steel sheet with an average surface resistance of more than 10 mΩ may be used as the steel sheet 11.

As described above, the first energizing condition, the cooling condition, and the second energizing condition are not particularly limited. An appropriate value according to the type of surface treatment of the steel sheet and the like can be appropriately selected. Here, a preferable example of a combination of the first energizing condition, the cooling condition, and the second energizing condition when the steel sheet 11 is a zinc-type-coated hot stamping steel sheet is as follows. When the steel sheet 11 is a zinc-type-coated hot stamping steel sheet and the sheet thickness of the steel sheet 11 is 1.2 mm to 3.6 mm, the length of the cooling step is preferably 332 msec or more, and the average current value I1 in the first energizing step, the energizing time t1 in the first energizing step, the average current value 12 in the second energizing step, and the energizing time t2 in the second energizing step preferably satisfy a relationship of $I2 \times t2 \geq 0.5 \times (I1 \times t1)$.

The length of the cooling step is the length of the non-energizing time between the first energization and the second energization. By setting the length of the cooling step to 332 msec or more, it is possible to sufficiently cool the joint portion 13 and to cause quench hardening. The length of the cooling step may be 498 msec or more, or 581 msec or more. The upper limit of the length of the cooling step is, for example, 4 sec, preferably 3 sec, and more preferably 2 sec. It is not necessary to completely stop the energization in the cooling step, and the energization may be slightly performed.

The energizing time t1 in the first energizing step is a length of a period from a time point at which energization for joining the projection and the steel sheet is started to a time point at which the current value becomes substantially 0. When there is a pre-energizing step for softening the projection before the first energizing step, the pre-energizing time is not included in the energizing time t1. The average current value 11 in the first energizing step is an average value of current values in the period. The energizing time t2 in the second energizing step is a length of a period from a time point at which the cooling step is completed and energization is started to a time point at which the current value becomes 0 again. The average current value 12 in the second energizing step is an average value of current values in the period. The current value in the first energizing step and the second energizing step may be a constant value or may vary during the energization period. The average current value 11 from the start to the end of the first energizing step is a value obtained by dividing the time integral value of the current value in the period from the start point to the end point of the first energizing step by the energizing time t1 in the first energizing step. Similarly, the average current value I2 from the start to the end of the second energizing step is a value obtained by dividing the time integral value of the current value in the period from the start point to the end point of the second energizing step by the energizing time t2 in the second energizing step.

By setting the $12 \times t2$ to 0.5 times or more the $11 \times t1$, the temperature of the joint portion 13 can be reliably raised to equal to or more than the tempering temperature. The $I2 \times t2$ may be 0.6 times or more, or 0.8 times or more the $I1 \times t1$. The upper limit of $I2 \times t2$ is not particularly limited, but the $I2 \times t2$ may be defined as 4.5 times or less or 4.0 times or less the $I1 \times t1$ in order to prevent the joint portion 13 from being heated above the re-quenching temperature.

(Pre-energizing step)

Before the first energizing step, the steel sheet 11 and the steel member 12 may be energized with a current value less than the current value at the start of the first energizing step. This energization is referred to as pre-energization. By performing the pre-energizing step, the projection 121 of the steel member 12 can be softened and deformed before the joining phenomenon between the steel sheet 11 and the steel member 12 occurs. As a result, the contact state between the plurality of projections 121 and the steel sheet 11 can be made uniform, and the joining strength of the projection weld joint can be further enhanced. In particular, when the steel sheet 11 is a zinc-type hot stamping steel sheet, the pre-energization is effective for ensuring the joining strength. As described above, in the projection welding of the zinc-type hot stamping steel sheet, the heating temperature for each projection tends to vary due to the variation in the surface resistance value. However, by performing the pre-energization prior to the first energization, the contact area between the projection and the steel sheet is enlarged, the variation in the surface resistance value is mitigated, and the heating temperature for each projection can be made uniform.

The current value in the pre-energizing step may be a constant value or may vary during the energization period. For example, the power supply may be controlled so that the current value at the time of the pre-energizing step gradually increases. When the temporal change of the current value is plotted in a graph under such energizing conditions, the graph has a slope shape with a positive slope. On the other hand, the current value may be instantaneously increased to a predetermined value, and the current value may be held at the predetermined value. Various energization patterns can be applied to the pre-energizing step. In addition, a non-energizing time may be provided between the pre-energizing step and the first energizing step, or the pre-energizing step and the first energizing step may be continuously performed.

<Projection weld joint>

Next, the projection weld joint according to the present embodiment will be described below. Note that the various configurations described in the method for manufacturing a projection weld joint described above can be appropriately applied to a projection weld joint to be described later. However, the method for manufacturing a projection weld joint according to the present embodiment is not particularly limited. A projection weld joint obtained by a method other than the manufacturing method described above is also understood to be the projection weld joint according to the present embodiment when the requirement described below is satisfied.

The projection weld joint 1 according to the present embodiment includes a steel sheet 11 that is a non-coated steel sheet or a zinc-type-coated steel sheet, a steel member 12 that is a nut or a bolt, and a plurality of joint portions 13 that join a first surface 11a of the steel sheet 11 and the steel member 12, in which the steel sheet 11 has a tensile strength of 1.5 GPa or more, and the steel sheet 11 has a carbon equivalent Ceq calculated by following formula 2 of 0.30 mass% or more, and when, in a cross section passing through the center of the steel member 12 and the center of the joint portion 13 and perpendicular to the first surface 11a of the steel sheet 11, a position farthest from the center of the steel member 12 in the joint portion 13 is defined as an end portion 130 of the joint portion 13, and a region from the end portion 130 to a position 0.5 mm away from the end portion 130 towards the center of the steel member 12 along the first surface 11a of the steel sheet 11 in the joint portion 13 is defined as an end region 131 of the joint portion 13, a maximum hardness Hedge of the end region 131 obtained by continuously measuring the Vickers hardness at a position 0.3 mm deep from the first surface 11a in each of the plurality of joint portions 13 satisfies a relationship of formula 3, and a maximum hardness Hmax of the joint portions 13 obtained by continuously measuring the Vickers hardness at a position 0.3 mm deep from the first surface 11a in each of the plurality of joint portions 13 satisfies a relationship of formula 4.

$$Ceq = [C] + [Si]/30 + [Mn]/20 + 2 \times [P] + 4 \times [S]: \text{formula 2}$$

$$Hedge < 0.9 \times Hm: \text{formula 3}$$

$$Hmax > 0.9 \times Hm: \text{formula 4}$$

wherein the symbol Hm included in the formulas 3 and 4 is a value calculated by formula 5.

$$Hm = 884 \times [C] \times (1 - 0.3 \times [C]^2) + 294: \text{formula 5}$$

wherein the element symbol included in the formula 2 and the formula 5 is the content of each element included in the steel sheet.

(Steel sheet 11)

The steel sheet 11 is a non-coated high strength steel sheet or a zinc-type-coated high strength steel sheet having a tensile strength of 1.5 GPa or more and a carbon equivalent Ceq of 0.30 mass% or more. As a result, the projection weld joint 1 has extremely excellent static strength. The preferred form of the steel sheet 11 exemplified in the method for manufacturing a projection weld joint described above can be applied to the steel sheet 11 of the projection weld joint 1 according to the present embodiment.

(Steel member 12)

In the projection weld joint according to the present embodiment, the steel member 12 is a bolt or a nut. Here, the steel member 12 may or may not include the plurality of projections 121 in contact with the steel sheet 11 in a distinguishable manner. This is because the plurality of projections 121 can be crushed and lost during projection welding. Further, the projection 121 is required for projection welding, and is not particularly required after completion of welding. Furthermore, the shape of the steel member 12 is not particularly limited.

(Joint portion 13)

The joint portion 13 is formed at a contact part between the plurality of projections 121 and the first surface 11a of the steel sheet 11 by projection welding. Therefore, the number of the joint portions 13 is 2 or more, and preferably 3 or more or 4 or more. The joint portion 13 joins the first surface 11a of the steel sheet 11 and the steel member 12. The joint portion 13 may be made of a weld metal or a solid-phase joining surface. The position of the joint portion 13 is not particularly limited, but similarly to the projection 121, the joint portion 13 is preferably disposed at a position rotationally symmetric with respect to the centroid of the steel member 12 in a plane view with respect to the joining surface.

In the projection weld joint 1 according to the present embodiment, in each of the plurality of joint portions 13, the maximum hardness Hedge in the end region 131 and the maximum hardness Hmax in the entire joint portions 13 are within predetermined ranges. A specific method for measuring the hardness will be described later.

In the projection weld joint according to the present embodiment, the entire joint portion 13 is once quenched, and the end region 131 of the joint portion 13 is further tempered. As a result, the maximum hardness Hedge of the end region 131 satisfies formula 3, and the maximum hardness Hmax of the joint portion 13 satisfies formula 4.

$$\text{Hedge} < 0.9 \times \text{Hm: formula 3}$$

$$\text{Hmax} > 0.9 \times \text{Hm: formula 4}$$

Here, Hm included in formulas 3 and 4 is a value calculated by formula 5.

$$\text{Hm} = 884 \times [\text{C}] \times (1 - 0.3 \times [\text{C}]^2) + 294\text{: formula 5}$$

Here, the element symbol included in formula 5 is the content of each element included in the steel sheet 11.

The Hm of the steel sheet is an estimated value of the Vickers hardness of the steel sheet when the steel sheet is tempered so that the microstructure is entirely martensite. Based on the Hm, the hardness of the steel sheet after quenching can be predicted. When the maximum hardness Hmax of the joint portion 13 is more than 0.9 times the Hm, it can be regarded that quench hardening occurs in the joint portion 13. Also, when the maximum hardness Hmax of the joint portion 13 is more than 0.9 times the Hm and the maximum hardness Hedge of the end region 131 is less than 0.9 times the Hm, the end region 131 can be regarded as once quenched and then tempered after projection welding. Since the end region 131, which is a dangerous part of the joint portion 13, is softened, the projection weld joint 1 according to the present embodiment has high delayed fracture resistance property.

Hedge may be 0.8 times or less the Hm. That is, the maximum hardness Hedge of the end region may satisfy a relationship of a following formula 3'. This further enhances the delayed fracture resistance property of the projection weld joint 1.

$$\text{Hedge} < 0.8 \times \text{Hm: formula 3'}$$

Hedge may be less than or equal to 0.7 times or less than or equal to 0.6 times the Hm. However, even when the relationship of formula 3 is not satisfied in the joint portion 13, the effect of suppressing the delayed fracture can be obtained as long as the joint portion 13 is quenched and tempered in the cooling step and the second energizing step described above.

(Method for measuring hardness of joint portion 13)

A method for measuring the maximum hardness Hedge of the end region 131 and the maximum hardness Hmax of the joint portion 13 is as follows. First, all of the plurality of joint portions 13 are cut in a plane perpendicular to the first surface 11a of the steel sheet 11, and then the cut surface is polished. Each of these cut surfaces needs to pass through the center of the steel member 12 and the center of the joint portion 13. For example, in a steel member having three projection portions as shown in FIG. 2, the joint portion 13 is cut along a one-dot chain line.

Next, in all the cut surfaces, the Vickers hardness is continuously measured along a line parallel to the first surface 11a of the steel sheet 11 and at a position 0.3 mm deep from the first surface 11a. The measurement load is 500 g, the time for applying the load to an indenter is 10 seconds, and the measurement interval is 0.25 mm. As a result, for each cut surface, a graph showing a relationship between the hardness measurement position and the hardness, for example, as shown in FIG. 3, can be created.

In the hardness - measurement position graph obtained by the above procedure, a hardness measurement value from the end portion of the joint portion to a position 0.5 mm away therefrom is extracted. The maximum value among these hardness measurement values is regarded as the maximum hardness Hedge of the end region 131. Similarly, the maximum value among all the hardness measurement values of the joint portion is regarded as the maximum hardness Hmax of the joint portion 13. When the hardness measurement value corresponding to Hmax is a value obtained inside the end region 131, Hedge and Hmax have the same value. However, in this case, both the above-described formulas 3 and 4 are not satisfied.

In each of the plurality of joint portions, Hedge and Hmax are specified, and it is confirmed whether or not these satisfy the above formulas. In all the joint portions, a projection weld joint in which Hedge and Hmax satisfy the above formulas is regarded as the projection weld joint according to the present embodiment.

The steel sheet 11 may be a zinc-type-coated hot stamping steel sheet. Normally, when the steel member 12 is projection welded to a zinc-type-coated hot stamping steel sheet, delayed fracture tends to easily occur. This is because the zinc-type-coated hot stamping steel sheet has a large variation in surface resistance, and therefore the heating temperature of the plurality of projection portions tends to be uneven during projection welding. In addition, when the steel member 12 is projection welded to the zinc-type-coated hot stamping steel sheet, the pressing peeling strength may decrease. However, in the projection weld joint 1 according to the present embodiment, quenching and tempering are performed on the joint portion such that Hedge and Hmax satisfy the above-described formulas. Therefore, the projection weld joint 1 according to the present embodiment has high delayed fracture resistance property while having zinc-type coating. By having zinc-type coating, effects such as improvement in corrosion resistance and reduction in scale amount can be obtained.

<Vehicle component>

Next, a vehicle component according to the present embodiment will be described below. The vehicle component according to the present embodiment includes the projection weld joint according to the embodiment described above. Thus, the vehicle component according to the present embodiment is composed of a high strength steel sheet having a tensile strength of 1.5 GPa or more, and is excellent in delayed fracture resistance property. The vehicle component is, for example, a pillar component. Examples of the pillar component are an A pillar, a B pillar, a roof reinforcement, and the like.

Examples

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

Table 1 shows data for various steel sheets prepared for manufacturing the examples. For reference, the average surface resistance of the steel sheets was also shown in Table 1. The average surface resistance of the steel sheets can be measured by various methods, but in this experiment, the average surface resistance was measured by the following procedure, and the results are shown in Table 1. The steel sheet 11 was pinched with a pair of dome-type Cu-Cr electrodes with a tip diameter of $\Phi$6 mm and 40R. The pressurizing force was 250 kgf. Then, a DC constant current 2A was applied to the electrode. The resistance value of the portion pinched with the electrodes was calculated based on the current value and the voltage value at the time of energization. According to this measurement method, the total value of the internal resistance and the surface resistance of the steel sheet 11 at the portion pinched with the electrodes is measured. However, the internal resistance of the steel sheet 11 is very small. Therefore, the value obtained by this measurement method can be regarded as the surface resistance of the steel sheet 11 at the position pinched with the electrodes. The resistance value was measured at 10 points, and the average value of the obtained measurement values was regarded as the average surface resistance of the steel sheet 11.

Tables 2A and 2B show projection welding conditions. Here, the "pressurizing force" refers to a pressure for pressurizing the steel member against the steel sheet during a projection welding (first energization) step, a cooling step, and a second energizing step. In a series of steps, the pressurizing force was set to a constant value. The "Squeeze" refers to the time from the start of application of pressurizing force to the start of flow of the projection welding current. The "Holding step" refers to the time from the end of the second energization until the pressurizing force is reduced to 0. The "First heat input" is the product of the average current value and the energizing time in the projection welding (first energization), and the "Second heat input" is the product of the average current value and the energizing time in the second energization. In all the examples, before the first energization, pre-energization including 2 eye of up-slope energization and 6 eye of constant energization was performed.

Table 3 shows the hardness measurement results of the joint portion and the evaluation results of the delayed fracture resistance property. In the column of "Quenching determination of joint portion", "GOOD" was written when the maximum hardness Hmax of the joint portion exceeded the value in the column of "0.9 × Hm" in Table 1, and "BAD" was written otherwise. In the column of "Tempering of end region", "GOOD" was written when the maximum hardness Hedge of the end region was below the value in the column of "0.9 × Hm" in Table 1, "VERY GOOD" was written when the maximum hardness Hedge was below the value in the column of "0.8 × Hm" in Table 1, and "BAD" was written otherwise.

The hardness measurement was performed according to the method described above. Under the conditions of this experiment, all the three joint portions were formed symmetrically. Therefore, only the measurement value of one joint portion was written in the table as a representative value. However, since there is a case where the joint portions are not formed symmetrically under the actual operation condition, it is desirable to perform hardness evaluation or the like on all the joint portions.

The delayed fracture resistance property was first evaluated for the projection weld joint after four days had passed after completion of welding. The joint portion of the joint was cut and polished, and then observed at a magnification of 200 to confirm whether or not there was cracks. Crack confirmation was performed for 6 samples per condition. With respect to the condition under which cracks occurred in 4 or more of the 6 samples, "BAD" was written in the column of "Crack investigation result: After welding", with respect to the condition under which cracks occurred in 1 to 3 of the 6 samples, "MODERATE" was written in the column of "Crack investigation result: After welding", and with respect to the condition under which cracks did not occur in any of the 6 samples, "GOOD" was written in the column of "Crack investigation result: After welding". Note that although three joint portions were formed per projection weld joint, if one or more of the three joint portions were cracked, the joint was judged to be a "cracked joint".

In addition, the projection weld joint immediately after completion of welding was immersed in hydrochloric acid with the same pH for a predetermined time. In hydrochloric acid, hydrogen enters a joint portion or the like, so that delayed fracture is promoted. The three joint portions of the projection weld joint after immersion were cut and polished, and then observed at a magnification of 200 to confirm whether or not there was cracks. Crack confirmation was performed for 6 samples per condition. With respect to the condition under which cracks occurred in 4 or more of the 6 samples, "BAD" was written in the column of "Crack investigation result: Hydrochloric acid", with respect to the condition under which cracks occurred in 1 to 3 of the 6 samples, "MODERATE" was written in the column of "Crack investigation result: Hydrochloric acid", and with respect to the condition under which cracks did not occur in any of the 6 samples, "GOOD" was written in the column of "Crack investigation result: Hydrochloric acid".

The worse of the two types of evaluation results was written in the column of "Determination" as the comprehensive evaluation. The condition under which the determination was MODERATE or GOOD was judged as an invention example excellent in delayed fracture resistance property.

[Table 1]

|  | Kind of steel | Ceq | Amount of carbon | Hm | 0.9×Hm | 0.8×Hm | Tensile strength of steel sheet | Sheet thickness | Average surface resistance |
|---|---|---|---|---|---|---|---|---|---|
|  |  | Mass% | Mass% | HV | HV | HV | GPa | mm | mΩ |
| 1 | GA-HS | 0.43 | 0.33 | 576 | 519 | 461 | 2.0 | 2.0 | ≤ 10 |
| 2 | GA-HS | 0.43 | 0.33 | 576 | 519 | 461 | 2.0 | 2.3 | ≤ 10 |
| 4 | CR-HS | 0.33 | 0.22 | 486 | 437 | 389 | 1.5 | 2.3 | ≤ 1 |
| 5 | CR-HT | 0.33 | 0.22 | 486 | 437 | 389 | 1.5 | 2.3 | ≤ 1 |
| 6 | GA-HS | 0.43 | 0.33 | 576 | 519 | 461 | 2.0 | 2.3 | ≤ 10 |
| 7 | GA-HS | 0.29 | 0.13 | 408 | 368 | 327 | 1.3 | 2.0 | ≤ 10 |
| 8 | GA-HS | 0.43 | 0.33 | 576 | 519 | 461 | 2.0 | 2.0 | ≤ 10 |
| 9 | GA-HS | 0.43 | 0.33 | 576 | 519 | 461 | 2.0 | 2.0 | ≤ 10 |
| 10 | GA-HS | 0.43 | 0.33 | 576 | 519 | 461 | 2.0 | 2.0 | ≤ 10 |
| 11 | GA-HS | 0.43 | 0.33 | 576 | 519 | 461 | 2.0 | 2.0 | ≤ 10 |
| 12 | GA-HS | 0.43 | 0.33 | 576 | 519 | 461 | 2.0 | 2.0 | ≤ 10 |
| 13 | GA-HS | 0.43 | 0.33 | 576 | 519 | 461 | 2.0 | 2.0 | ≤ 10 |
| 14 | GA-HS | 0.43 | 0.33 | 576 | 519 | 461 | 2.0 | 2.0 | ≤ 10 |
| 15 | GA-HS | 0.43 | 0.33 | 576 | 519 | 461 | 2.0 | 2.0 | ≤ 10 |
| 16 | GA-HS | 0.43 | 0.33 | 576 | 519 | 461 | 2.0 | 2.0 | ≤ 10 |
| 17 | GA-HS | 0.43 | 0.33 | 576 | 519 | 461 | 2.0 | 2.0 | ≤ 10 |
| 18 | GA-HS | 0.43 | 0.33 | 576 | 519 | 461 | 2.0 | 2.0 | ≤ 10 |
| 19 | GA-HS | 0.43 | 0.33 | 576 | 519 | 461 | 2.0 | 2.0 | ≤ 10 |

(continued)

| | Kind of steel | Ceq | Amount of carbon | Hm | 0.9×Hm | 0.8×Hm | Tensile strength of steel sheet | Sheet thickness | Average surface resistance |
|---|---|---|---|---|---|---|---|---|---|
| | | Mass% | Mass% | HV | HV | HV | GPa | mm | mΩ |
| 20 | GA-HS | 0.45 | 0.35 | 592 | 533 | 474 | 2.0 | 2.3 | ≤ 10 |
| 21 | GA-HS | 0.45 | 0.35 | 592 | 533 | 474 | 2.0 | 1.6 | ≤ 10 |
| 22 | GA-HS | 0.45 | 0.35 | 592 | 533 | 474 | 2.0 | 1.8 | ≤ 10 |
| 23 | GA-HS | 0.45 | 0.35 | 592 | 533 | 474 | 2.0 | 2.0 | ≤ 10 |
| 24 | GA-HS | 0.45 | 0.35 | 592 | 533 | 474 | 2.0 | 2.3 | ≤ 10 |
| 25 | GA-HS | 0.45 | 0.35 | 592 | 533 | 474 | 2.0 | 2.6 | ≤ 10 |
| 26 | GA-HS | 0.45 | 0.35 | 592 | 533 | 474 | 2.0 | 2.9 | ≤ 10 |
| 27 | GA-HS | 0.30 | 0.22 | 486 | 437 | 389 | 1.5 | 2.3 | ≤ 10 |
| 29 | CR-HS | 0.30 | 0.22 | 486 | 437 | 389 | 1.5 | 2.3 | ≤ 10 |
| 30 | CR-HT | 0.30 | 0.22 | 486 | 437 | 389 | 1.5 | 2.3 | ≤ 10 |
| 31 | GA-HS | 0.45 | 0.35 | 592 | 533 | 474 | 1.8 | 2.3 | ≤ 10 |

[Table 2A]

| | Pressurizing force | Squeeze | First energization | | Cooling |
|---|---|---|---|---|---|
| | | | Time | Current | Rest |
| | kN | ms | ms | kA | ms |
| 1 | 5.0 | 996 | 132.8 | 16.5 | |
| 2 | 5.0 | 996 | 132.8 | 16.5 | |
| 4 | 5.0 | 996 | 132.8 | 16.5 | |
| 5 | 5.0 | 996 | 132.8 | 16.5 | |
| 6 | 5.0 | 996 | 132.8 | 16.5 | 166 |
| 7 | 5.0 | 996 | 132.8 | 16.5 | |
| 8 | 5.0 | 996 | 132.8 | 16.5 | 664 |
| 9 | 5.0 | 996 | 132.8 | 16.5 | 664 |
| 10 | 5.0 | 996 | 132.8 | 16.5 | 664 |
| 11 | 5.0 | 996 | 132.8 | 16.5 | 664 |
| 12 | 5.0 | 996 | 132.8 | 16.5 | 664 |
| 13 | 5.0 | 996 | 132.8 | 16.5 | 664 |
| 14 | 5.0 | 996 | 132.8 | 16.5 | 664 |
| 15 | 5.0 | 996 | 132.8 | 16.5 | 664 |
| 16 | 5.0 | 996 | 132.8 | 16.5 | 664 |
| 17 | 5.0 | 996 | 132.8 | 16.5 | 664 |
| 18 | 5.0 | 996 | 132.8 | 16.5 | 664 |
| 19 | 5.0 | 996 | 132.8 | 16.5 | 664 |
| 20 | 5.0 | 996 | 132.8 | 16.5 | 498 |
| 21 | 5.0 | 996 | 99.6 | 15.5 | 332 |
| 22 | 5.0 | 996 | 99.6 | 15.5 | 498 |

14

(continued)

|  | Pressurizing force | Squeeze | First energization | | Cooling |
|---|---|---|---|---|---|
|  |  |  | Time | Current | Rest |
|  | kN | ms | ms | kA | ms |
| 23 | 5.0 | 996 | 132.8 | 16.5 | 664 |
| 24 | 5.0 | 996 | 166.0 | 16.5 | 830 |
| 25 | 5.0 | 996 | 166.0 | 16.5 | 996 |
| 26 | 5.5 | 996 | 166.0 | 17.0 | 1162 |
| 27 | 5.0 | 996 | 132.8 | 16.5 | 498 |
| 29 | 5.0 | 996 | 132.8 | 16.5 | 498 |
| 30 | 5.0 | 996 | 132.8 | 16.5 | 498 |
| 31 | 5.0 | 996 | 132.8 | 16.5 | 498 |

[Table 2B]

|  | Second energization | | Holding time | First heat input | Second heat input | Heat input ratio |
|---|---|---|---|---|---|---|
|  | Time | Current |  |  |  |  |
|  | ms | kA | ms | A·s | A·s |  |
| 1 |  |  | 332 | 2191 | 0 | 0.0 |
| 2 |  |  | 332 | 2191 | 0 | 0.0 |
| 4 |  |  | 332 | 2191 | 0 | 0.0 |
| 5 |  |  | 332 | 2191 | 0 | 0.0 |
| 6 | 166 | 13.0 | 166 | 2191 | 2158 | 1.0 |
| 7 |  |  | 332 | 2191 | 0 | 0.0 |
| 8 | 133 | 6.6 | 166 | 2191 | 876 | 0.4 |
| 9 | 133 | 8.3 | 166 | 2191 | 1096 | 0.5 |
| 10 | 133 | 9.9 | 166 | 2191 | 1315 | 0.6 |
| 11 | 133 | 16.5 | 166 | 2191 | 2191 | 1.0 |
| 12 | 133 | 19.8 | 166 | 2191 | 2629 | 1.2 |
| 13 | 53 | 16.5 | 166 | 2191 | 876 | 0.4 |
| 14 | 66 | 16.5 | 166 | 2191 | 1096 | 0.5 |
| 15 | 106 | 16.5 | 166 | 2191 | 1753 | 0.8 |
| 16 | 133 | 16.5 | 166 | 2191 | 2191 | 1.0 |
| 17 | 159 | 16.5 | 166 | 2191 | 2629 | 1.2 |
| 18 | 319 | 16.5 | 166 | 2191 | 5259 | 2.4 |
| 19 | 478 | 16.5 | 166 | 2191 | 7888 | 3.6 |
| 20 | 133 | 16.5 | 166 | 2191 | 2191 | 1.0 |
| 21 | 100 | 15.5 | 166 | 1544 | 1544 | 1.0 |
| 22 | 100 | 15.5 | 166 | 1544 | 1544 | 1.0 |
| 23 | 133 | 16.5 | 166 | 2191 | 2191 | 1.0 |
| 24 | 166 | 16.5 | 166 | 2739 | 2739 | 1.0 |
| 25 | 166 | 16.5 | 166 | 2739 | 2739 | 1.0 |

(continued)

| | Second energization | | Holding time | First heat input | Second heat input | Heat input ratio |
|---|---|---|---|---|---|---|
| | Time | Current | | | | |
| | ms | kA | ms | A·s | A·s | |
| 26 | 166 | 17.0 | 166 | 2822 | 2822 | 1.0 |
| 27 | 66 | 16.5 | 166 | 2191 | 1096 | 0.5 |
| 29 | 133 | 16.5 | 166 | 2191 | 2191 | 1.0 |
| 30 | 133 | 16.5 | 166 | 2191 | 2191 | 1.0 |
| 31 | 133 | 16.5 | 166 | 2191 | 2191 | 1.0 |

[Table 3]

| | Hmax | Hedge | Quenching determination of joint portion | Quenching determination of end region | Crack investigation result (n6) | | Determination | Example / Comparative Example |
|---|---|---|---|---|---|---|---|---|
| | HV | HV | | | After welding | Hydrochloric acid | | |
| 1 | 600 | 600 | Good | Bad | Bad | Bad | Bad | Comparative Example |
| 2 | 600 | 600 | Good | Bad | Bad | Bad | Bad | Comparative Example |
| 4 | 470 | 450 | Good | Bad | Bad | Bad | Bad | Comparative Example |
| 5 | 470 | 450 | Good | Bad | Bad | Bad | Bad | Comparative Example |
| 6 | 600 | 580 | Good | Bad | Moderate | Bad | Bad | Comparative Example |
| 7 | 420 | 420 | Good | Bad | Good | Good | Good | Reference Example |
| 8 | 550 | 480 | Good | Good | Good | Moderate | Moderate | Example |
| 9 | 550 | 465 | Good | Good | Good | Moderate | Moderate | Example |
| 10 | 550 | 410 | Good | Very Good | Good | Good | Good | Example |
| 11 | 550 | 350 | Good | Very Good | Good | Good | Good | Example |
| 12 | 550 | 350 | Good | Very Good | Good | Good | Good | Example |
| 13 | 550 | 500 | Good | Good | Good | Moderate | Moderate | Example |
| 14 | 550 | 440 | Good | Very Good | Good | Good | Good | Example |
| 15 | 550 | 400 | Good | Very Good | Good | Good | Good | Example |
| 16 | 550 | 350 | Good | Very Good | Good | Good | Good | Example |
| 17 | 550 | 350 | Good | Very Good | Good | Good | Good | Example |
| 18 | 550 | 360 | Good | Very Good | Good | Good | Good | Example |
| 19 | 550 | 350 | Good | Very Good | Good | Good | Good | Example |
| 20 | 570 | 430 | Good | Very Good | Good | Good | Good | Example |
| 21 | 570 | 400 | Good | Very Good | Good | Good | Good | Example |
| 22 | 570 | 430 | Good | Very Good | Good | Good | Good | Example |
| 23 | 570 | 400 | Good | Very Good | Good | Good | Good | Example |

(continued)

|  | Hmax | Hedge | Quenching determination of joint portion | Quenching determination of end region | Crack investigation result (n6) | | Determination | Example / Comparative Example |
|---|---|---|---|---|---|---|---|---|
|  | HV | HV |  |  | After welding | Hydrochloric acid |  |  |
| 24 | 570 | 420 | Good | Very Good | Good | Good | Good | Example |
| 25 | 570 | 380 | Good | Very Good | Good | Good | Good | Example |
| 26 | 570 | 360 | Good | Very Good | Good | Good | Good | Example |
| 27 | 450 | 420 | Good | Good | Good | Moderate | Moderate | Example |
| 29 | 450 | 320 | Good | Very Good | Good | Good | Good | Example |
| 30 | 450 | 330 | Good | Very Good | Good | Good | Good | Example |
| 31 | 570 | 360 | Good | Very Good | Good | Good | Good | Example |

Conditions not described in the table were as follows.

- Steel member: M8 nut with three dome-shaped projections
- Zinc-type coating: None

In the manufacture of Comparative Examples 1 to 4, the cooling step and the second energizing step were not performed. Therefore, in the joints of Comparative Examples 1 to 4, neither a quenching hardened part nor a tempering softened part was confirmed. In these Comparative Examples, the evaluation results of delayed fracture resistance property after immersion in hydrochloric acid were poor.

In the manufacture of Comparative Example 5, tempering of the end region was insufficient. Therefore, in Comparative Example 5, the evaluation results of delayed fracture resistance property after immersion in hydrochloric acid were poor.

In Reference Example 6, the cooling step and the second energizing step were not performed, and a quenching hardened part and a tempering softened part were not formed, but the delayed fracture resistance property was good. This is because the steel sheet had a tensile strength of below 1.5 GPa. As described above, when the steel sheet has a tensile strength of below 1.5 GPa, the delayed fracture in projection welding does not become a problem.

On the other hand, as a result of performing the cooling step and the second energizing step after the projection welding, the examples in which the joint portion was quenched and the end region was tempered were excellent in delayed fracture resistance property although the tensile strength of the steel sheet exceeded 1.5 GPa.

Brief Description of the Reference Symbols

1 Projection weld joint
11 Steel sheet
111 Through hole
11a First surface
11b Second surface
12 Steel member
121 Projection
13 Joint portion
130 End portion
131 End region
132 Center region
i Hardness measurement point

Claims

1.    A method for manufacturing a projection weld joint, the manufacturing method comprising a first energizing step of energizing a steel sheet and a steel member so as to form a plurality of joint portions by projection welding the steel member, which is a nut or a bolt having a plurality of projections, to a first surface of the steel sheet which is a non-coated steel sheet or a zinc-type-coated steel sheet,
wherein

the steel sheet has a tensile strength of 1.5 GPa or more, and
the steel sheet has a carbon equivalent Ceq calculated by following formula 1 of 0.30 mass% or more, and
when, in a cross section passing through the center of the steel member and the center of the joint portion and perpendicular to the first surface of the steel sheet, a position farthest from the center of the steel member in the joint portion is defined as an end portion of the joint portion, and a region from the end portion to a position 0.5 mm away from the end portion towards the center of the steel member along the first surface of the steel sheet in the joint portion is defined as an end region of the joint portion,
the manufacturing method further comprises:

a cooling step of quenching each of the plurality of joint portions; and
a second energizing step of further energizing the steel sheet and the steel member so as to temper the end region in each of the plurality of joint portions,

$$Ceq = [C] + [Si]/30 + [Mn]/20 + 2 \times [P] + 4 \times [S]: \text{formula } 1$$

wherein the element symbol included in the formula 1 is a content of each element included in the steel sheet.

2. The method for manufacturing a projection weld joint according to claim 1, wherein the steel sheet is a hot stamping steel sheet.

3. The method for manufacturing a projection weld joint according to claim 1 or 2, wherein the steel sheet has a chemical composition containing, by mass%,

C: 0.07 to 0.45%,
Si: 0.001 to 2.50%,
Mn: 0.8 to 5.0%,
P: 0.03% or less, and
S: 0.01% or less.

4. The method for manufacturing a projection weld joint according to any one of claims 1 to 3, wherein the steel sheet is a zinc-type-coated hot stamping steel sheet.

5. The method for manufacturing a projection weld joint according to any one of claims 1 to 4, wherein

the steel sheet is a zinc-type-coated hot stamping steel sheet,
the steel sheet has a sheet thickness of 1.2 mm to 3.6 mm, and
the length of the cooling step is 332 msec or more, and
product $12 \times t2$ of average current value 12 and energizing time t2 in the second energizing step is 0.5 times or more product $I1 \times t1$ of average current value I1 and energizing time t1 in the first energizing step.

6. The method for manufacturing a projection weld joint according to any one of claims 1 to 5, wherein the method for manufacturing a projection weld joint further comprises a pre-energizing step of energizing the steel sheet and the steel member with a current value less than the current value at start of the first energizing step before the first energizing step.

7. The method for manufacturing a projection weld joint according to any one of claims 1 to 6, wherein the steel member is the nut.

8. A projection weld joint comprising:

a steel sheet which is a non-coated steel sheet or a zinc-type-coated steel sheet;
a steel member which is a nut or a bolt; and

a plurality of joint portions which join a first surface of the steel sheet and the steel member,
wherein
the steel sheet has a tensile strength of 1.5 GPa or more, and
the steel sheet has a carbon equivalent Ceq calculated by following formula 2 of 0.30 mass% or more, and
when, in a cross section passing through the center of the steel member and the center of the joint portion and perpendicular to the first surface of the steel sheet, a position farthest from the center of the steel member in the joint portion is defined as an end portion of the joint portion, and a region from the end portion to a position 0.5 mm away from the end portion towards the center of the steel member along the first surface of the steel sheet in the joint portion is defined as an end region of the joint portion,
a maximum hardness Hedge of the end region obtained by continuously measuring a Vickers hardness at a position 0.3 mm deep from the first surface in each of the plurality of joint portions satisfies a relationship of formula 3, and
a maximum hardness Hmax of the joint portions obtained by continuously measuring a Vickers hardness at a position 0.3 mm deep from the first surface in each of the plurality of joint portions satisfies a relationship of formula 4,

$$Ceq = [C] + [Si]/30 + [Mn]/20 + 2 \times [P] + 4 \times [S]: \text{formula 2}$$

$$Hedge < 0.9 \times Hm: \text{formula 3}$$

$$Hmax > 0.9 \times Hm: \text{formula 4}$$

wherein the symbol Hm included in the formulas 3 and 4 is a value calculated by formula 5,

$$Hm = 884 \times [C] \times (1 - 0.3 \times [C]^2) + 294: \text{formula 5}$$

wherein the element symbol included in the formula 2 and the formula 5 is a content of each element included in the steel sheet.

9. The projection weld joint according to claim 8, wherein the maximum hardness Hedge of the end region satisfies a relationship of formula 3' in each of the plurality of joint portions.

$$Hedge < 0.8 \times Hm: \text{formula 3'}$$

10. The projection weld joint according to claim 8 or 9, wherein the steel sheet is a zinc-type-coated hot stamping steel sheet.

11. A vehicle component comprising the projection weld joint according to any one of claims 8 to 10.

# FIG. 1A

# FIG. 1B

# FIG. 1C

# FIG. 2

# FIG. 3

POSITION (mm)

<div align="center">

**INTERNATIONAL SEARCH REPORT**

</div>

| | International application No. |
|---|---|
| | **PCT/JP2022/047752** |

**A.     CLASSIFICATION OF SUBJECT MATTER**

**B23K 11/14**(2006.01)i; **B23K 11/00**(2006.01)i; **B23K 11/16**(2006.01)i; **B23K 11/24**(2006.01)i; **C22C 38/00**(2006.01)i;
**C22C 38/04**(2006.01)i
FI:    B23K11/14 310; B23K11/00 570; B23K11/16 311; B23K11/24 315; C22C38/00 301A; C22C38/04

According to International Patent Classification (IPC) or to both national classification and IPC

**B.     FIELDS SEARCHED**

Minimum documentation searched (classification system followed by classification symbols)

B23K11/14; B23K11/00; B23K11/16; B23K11/24; C22C38/00; C22C38/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| A | JP 2013-78784 A (NIPPON STEEL & SUMITOMO METAL CORP) 02 May 2013 (2013-05-02)<br>entire text, all drawings | 1-11 |
| A | JP 2004-50280 A (AISIN TAKAOKA LTD) 19 February 2004 (2004-02-19)<br>entire text, all drawings | 1-11 |
| A | JP 7020597 B1 (JFE STEEL CORP) 16 February 2022 (2022-02-16)<br>entire text, all drawings | 1-11 |
| A | WO 2020/240961 A1 (JFE STEEL CORP) 03 December 2020 (2020-12-03)<br>entire text, all drawings | 1-11 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/047752**

| Patent document cited in search report | | | Publication date (day/month/year) | Patent family member(s) | | | Publication date (day/month/year) |
|---|---|---|---|---|---|---|---|
| JP | 2013-78784 | A | 02 May 2013 | (Family: none) | | | |
| JP | 2004-50280 | A | 19 February 2004 | (Family: none) | | | |
| JP | 7020597 | B1 | 16 February 2022 | WO entire text, all drawings | 2021/261479 | A1 | |
| WO | 2020/240961 | A1 | 03 December 2020 | US entire text, all drawings | 2022/0228233 | A1 | |
| | | | | EP | 3978178 | A1 | |
| | | | | KR | 10-2021-0154239 | A | |
| | | | | CN | 113891773 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022050329 A
- JP 5626025 B
- JP 5613521 B

- JP 2013078784 A
- JP 2012157900 A
- JP 2004050280 A